(19) Europäisches Patentamt
European Patent Office
Office européen des brevets

(11) **EP 1 570 017 B1**

(12) **EUROPÄISCHE PATENTSCHRIFT**

(45) Veröffentlichungstag und Bekanntmachung des Hinweises auf die Patenterteilung:
**11.10.2006 Patentblatt 2006/41**

(21) Anmeldenummer: **03778309.9**

(22) Anmeldetag: **11.11.2003**

(51) Int Cl.:
***C09J 9/00*** *(2006.01)*

(86) Internationale Anmeldenummer:
**PCT/EP2003/012545**

(87) Internationale Veröffentlichungsnummer:
**WO 2004/050782 (17.06.2004 Gazette 2004/25)**

(54) **ANTISTATISCHES HAFTKLEBEBAND**

ANTI-STATIC SELF-ADHESIVE STRIP

BANDE AUTO-ADHESIVE ANTISTATIQUE

(84) Benannte Vertragsstaaten:
**DE ES FR GB IT**

(30) Priorität: **04.12.2002 DE 10256515**

(43) Veröffentlichungstag der Anmeldung:
**07.09.2005 Patentblatt 2005/36**

(73) Patentinhaber: **tesa AG**
**20253 Hamburg (DE)**

(72) Erfinder:
- **HUSEMANN, Marc**
  **22605 Hamburg (DE)**
- **ZÖLLNER, Stephan**
  **21244 Buchholz/Nordheide (DE)**

(74) Vertreter: **Stubbe, Andreas**
**tesa AG,**
**Kst. 9500 - Bf. 645,**
**Quickbornstrasse 24**
**20253 Hamburg (DE)**

(56) Entgegenhaltungen:
**DE-A- 3 327 612**
**DE-A- 19 612 367**
**JP-A- 63 158 241**
**JP-A- 63 158 244**
**US-A- 5 491 013**

- **PATENT ABSTRACTS OF JAPAN Bd. 2000, Nr. 23, 10. Februar 2001 (2001-02-10) & JP 2001 152105 A (SUMITOMO BAKELITE CO LTD), 5. Juni 2001 (2001-06-05)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 570 017 B1

Printed by Jouve, 75001 PARIS (FR)

## Beschreibung

Die Erfindung betrifft ein ein- oder doppelseitiges antistatisches Haftklebeband mit mehrschichtigem Aufbau aus einer Trägerschicht und wenigstens einer Haftklebeschicht.

Haftklebebänder sind im Zeitalter der Industrialisierung weitverbreitete Verarbeitungshilfsmittel. Insbesondere für den Einsatz in der Computerindustrie werden an Haftklebebänder sehr hohe Anforderungen gestellt. Neben einem geringen Ausgasungsverhalten sollten die Haftklebebänder in einem weiten Temperaturbereich einsetzbar sein und nach dem Entfernen keine elektrische Aufladung erzeugen. Diese elektrische Aufladung kann insbesondere hoch empfindliche elektrische Geräte stark schädigen. Diese Anforderungen sind z.B. essentiell für die Verklebung von Siliziumwafern. Es besteht somit ein großer Bedarf für antistatische Haftklebebänder. Ein spezielles Beispiel für ein antistatisches Haftklebeband ist z.B. in US 6,255,423 beschrieben.

Neben der Computerindustrie sind antistatische Haftklebebänder aber auch sehr gut anwendbar für repositionierbare Verklebungen. Hier besteht in der Regel das Problem, dass sich wiederum nach der Entfernung des gewöhnlichen Haftklebebandes Ladungen bilden, die die Wiederverklebung Erschweren, da dass Haftklebeband dann vom Substrat elektrostatisch abgestoßen wird. Dieses Problem verschärft sich, wenn Haftklebebänder mit einem dünnen und leichten Trägermaterial und geringem Masseauftrag eingesetzt werden. Das Problem kann durch antistatische Haftklebebänder gelöst werden.

In der Regel werden zur Herstellung antistatischer Haftklebebänder antistatische Trägermaterialien eingesetzt. Beispiele für antistatische Trägermaterialien sind z.B. in US 5,108,463, US 5,137,542, US 5,328,716 und US 5,560,753 beschrieben. Diese Trägermaterialien sind jedoch zu teuer. Die Eigenschaften, die von einem Trägermaterial erfüllt werden sollen, können mit anderen Materialien einfacher und kostengünstiger erzielt werden. Es ist daher nicht vorteilhaft, den Träger aus leitfähigem Material herzustellen.

In US 3,163,968 wird ein Haftklebeband beschrieben, das auf der Oberfläche Graphit als elektrisch leitfähiges Material trägt und somit antistatische Eigenschaften besitzt. In US 3,377,264 wird eine elektrisch leitfähige Schicht aus Metall oder einer Metallfolie beansprucht. In US 5,061,294 werden zur elektrischen Leitfähigkeit und somit zur Steigerung der antistatischen Eigenschaften dotierte konjugierten Polymere beansprucht.

Auf der Oberfläche des Haftklebebandes aufgebrachte leitfähige Schichten oder in die Haftklebemasse eingebrachte leitfähige Materialien beeinflussen jedoch die Klebeeigenschaften der Haftklebemasse, was unerwünscht ist.

In US 3,942,959 werden elektrisch leitfähige Harze beschrieben, die sich in einer Sandwich Konstruktion zwischen zwei nicht elektrisch leitfähigen Harzschichten befinden. Zur Verbesserung der elektrischen Leitfähigkeit werden Metallpigmente, Metallsalze oder Metalllegierungen eingesetzt. Hierdurch ergibt sich ein sehr aufwendiges Beschichtungsverfahren.

Aufgabe der Erfindung ist es daher antistatische Haftklebebänder zur Verfügung zu stellen, bei denen die Nachteile des Standes der Technik vermieden werden.

Zur Lösung dieser Aufgabe ist bei einem Haftklebeband der eingangs genannten Art wenigstens eine zusätzliche elektrisch leitfähige Schicht zwischen der Trägerschicht und einer Haftklebeschicht vorgesehen.

Der Erfindung liegt der Gedanke zugrunde, den Träger mit einem elektrisch leitfähigen Primer zu behandeln, d.h. eine elektrisch leitfähige zusätzliche Schicht auf dem Träger vorzusehen, über die dann eine Haftklebeschicht gelegt wird. Diese Maßnahme kann einseitig, beidseitig oder auch nur auf Teilen des Trägers erfolgen.

Die Erfindung betrifft somit ein- oder doppelseitige antistatische Haftklebebänder, die wie nachfolgend im Zusammenhang mit Figur 1 näher erläutert aus einem Trägermaterial mit einem elektrisch leitfähigen Primer und einer Haftklebemassenschicht bestehen, nach Figur 2 aus einem Trägermaterial einem elektrisch leitfähigen Primer und zwei Haftklebemassen bestehen und nach Figur 3 aus einem Trägermaterial zwei elektrisch leitfähigen Primern und zwei Haftklebemassen bestehen.

Die elektrisch leitfähige Schicht kann elektrisch leitfähige Partikel enthalten, vorzugsweise aus Metall, elektrisch dotierten Materialien oder elektrisch leitfähigen Polymeren. Diese elektrisch leitfähigen Partikel können beispielsweise in Polymere eingebettet sein. Der Anteil dieser Partikel beträgt vorzugsweise 5 bis 60 Gew.-%, weiter vorzugsweise 10 bis 50 Gew.-%.

Die elektrisch leitfähige Schicht kann ebenso homogen verteilte elektrisch leitfähige Materialien enthalten, vorzugsweise elektrisch dotierte Materialien, elektrisch leitfähige Polymere oder elektrisch leitfähige organische Salze in einer Menge von vorzugsweise 5 bis 60, weiter vorzugsweise 10 bis 50 Gew.-%.

Besonders bevorzugt ist die Verwendung elektrisch leitfähiger konjugierter Polymere in der elektrisch leitenden Primer-Schicht, insbesondere von 3,4-PEDT.

In einer vorteilhaften Auslegung werden Haftklebemassen mit einem Rückstellvermögen eingesetzt. Im folgenden werden diese Haftklebemassen auch als anisotrop orientierte oder als orientierte Haftklebemassen bezeichnet.

Anisotrop orientierte Haftklebemassen besitzen die Tendenz, sich nach einer Streckung in eine vorgegebene Richtung durch das ‚entropieelastische Verhalten' in den Ausgangszustand zurückzubewegen.

In einer bevorzugten Auslegung besitzt die auf den elektrisch leitfähigen Primer aufgetragene Haftklebemasse eine Rückschrumpf. Der Rückschrumpf kann nach Test B über den Rückschrumpf im freien Film bestimmt werden kann sollte zumindest größer 3 % betragen. In bevorzugten Weiterentwicklungen werden Haftklebemassen eingesetzt, bei welchen der Rückschrumpf mindestens 30 %, sehr bevorzugten mindestens 50 % beträgt.

Als Haftklebemassensysteme für die erfinderischen antistatischen Haftklebebänder werden Acrylat-, Naturkautschuk-, Synthesekautschuk-, Silikon- oder EVA-Kleber eingesetzt, insbesondere von Vorteil sind aus dieser Gruppe die Acrylathaftklebemassen. Natürlich lassen sich mit dem Verfahren aber auch alle weiteren, dem Fachmann bekannten Haftklebemassen verarbeiten, wie sie z.B im "Handbook of Pressure Sensitive Adhesive Technology" von Donatas Satas (van Nostrand, New York 1989) aufgeführt sind.

Für Naturkautschukklebemassen wird der Naturkautschuk bis zu einem Molekulargewicht (Gewichtsmittel) nicht unter etwa 100.000 Dalton, bevorzugt nicht unter 500.000 Dalton gemahlen und additiviert.

Bei Kautschuk/Synthesekautschuk als Ausgangsmaterial für den Kleber sind weite Variationsmöglichkeiten gegeben, sei er aus der Gruppe der Naturkautschuke oder der Synthesekautschuke oder sei er aus einem beliebigen Blend aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil. Stellvertretend genannt seien an dieser Stelle vor allem die besonders verträglichen Styrol-Isopren-Styrol- (SIS) und Styrol-Butadien-Styrol (SBS) -Typen.

In einer erfinderisch besonders bevorzugten Auslegung werden bevorzugt (Meth)Acrylathaftklebemassen eingesetzt.

(Meth)Acrylathaftklebemassen, welche durch radikalische Polymerisation erhältlich sind, bestehen zu mindestens 50 Gew.-% auf zumindest einem acrylischen Monomer aus der Gruppe der Verbindungen der folgenden allgemeinen Formel basiert:

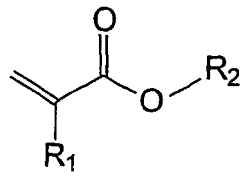

wobei $R_1$ = H oder $CH_3$ ist und der Rest $R_2$ = H oder $CH_3$ ist oder gewählt wird aus der Gruppe der verzweigten oder unverzweigten, gesättigten Alkylgruppen mit 1 - 30 Kohlenstoffatomen.

Die Monomere werden bevorzugt dermaßen gewählt, daß die resultierenden Polymere bei Raumtemperatur oder höheren Temperaturen als Haftklebemassen eingesetzt werden können, insbesondere derart, daß die resultierenden Polymere haftklebende Eigenschaften entsprechend des "Handbook of Pressure Sensitive Adhesive Technology" von Donatas Satas (van Nostrand, New York 1989) besitzen.

In einer weiteren erfinderischen Auslegung wird die Comonomerzusammensetzung derart gewählt, dass sich die Haftklebemassen als Hitze-aktivierbare Haftklebemassen einsetzen lassen.

In einer weiteren Ausführung der Erfindung können als Haftklebemasse auch elektrischleitfähige Haftklebemassen eingesetzt werden.

Die Molmassen $M_w$ der eingesetzten Polyacrylate betragen bevorzugt $M_w \geq 200.000$ g/mol.

In einer sehr bevorzugten Weise werden Acryl- oder Methacrylmomonere eingesetzt, die aus Acryl- und Methacrylsäureester mit Alkylgruppen aus 4 bis 14 C-Atomen bestehen, bevorzugt 4 bis 9 C-Atomen umfassen. Spezifische Beispiele, ohne sich durch diese Aufzählung einschränken zu wollen, sind Methlacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, wie z.B. Isobutylacrylat, 2-Ethylhexylacrylat, 2-Ethylhexylmethacrylat, Isooctylacrylat, Isooctylmethacrylat.

Weitere einzusetzende Verbindungsklassen sind monofunktionelle Acrylate bzw. Methacrylate von überbrückten Cycloalkylalkoholen, bestehend aus zumindestens 6 C-Atomen. Die Cycloalkylalkohole können auch substituiert sein, z.B. durch C-1-6-Alkylgruppen, Halogenatomen oder Cyanogruppen. Spezifische Beispiele sind Cyclohexylmethacrylate, Isobornylacrylat, Isobomylmethacrylate und 3,5-Dimethyladamantylacrylat.

In einer Vorgehensweise werden Monomere eingesetzt, die polare Gruppen wie Carboxylreste, Sulfon- und Phosphonsäure, Hydroxyreste, Lactam und Lacton, N-substituiertes Amid, N-substituiertes Amin, Carbamat-, Epoxy-, Thiol-, Alkoxy-. Cyanreste, Ether oder ähnliches tragen.

Moderate basische Monomere sind z.B. N,N-Dialkylsubstituierte Amide, wie z.B. N,N-Dimethylacrylamid, N,N-Dimethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Butoxymethyl)methacylamid, N-Methylolacrylamid, N-(Ethoxymethyl)acrylamid, N-Isopropylacrylamid, wobei diese Aufzählung nicht abschließend ist.

Weitere bevorzugte Beispiele sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glyceridylmethacrylat, Phenoxyethylacrlylat, Phenoxyethylmethacrylat, 2-Butoxyethylmethacrylat, 2-Butoxyethylacrylat, Gyanoethylmethacrylat, Cyanoethylacrylat, Glycerylmethacrylat, 6-Hydroxyhexylmethacrylat, Vinylessigsäure, Tetrahydrofufurylacrlyat, β-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren sehr bevorzugten Vorgehensweise werden als Monomere Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril.

Weiterhin werden in einer weiteren Vorgehensweise Photoinitiatoren mit einer copolymerisierbaren Doppelbindung eingesetzt. Als Photoinitiatoren sind Norrish-I- und -II-Photoinitiatoren geeignet. Beispiele sind z.B. Benzoinacrylat und ein acryliertes Benzophenon der Fa. UCB (Ebecryl P 36®). Im Prinzip können alle dem Fachmann bekannten Photoinitiatoren copolymerisiert werden, die das Polymer über einen Radikalmechanismus unter UV-Bestrahlung vemetzen können. Ein Überblick über mögliche einsetzbare Photoinitiatoren die mit einer Doppelbindung funktionalisiert werden können, wird in Fouassier: "Photoinititation, Photopolymerization and Photocuring: Fundamentals and Applications", Hanser-Verlag, München 1995, gegeben. Ergänzend wird Carroy et al. in "Chemistry and Technology of UV and EB Formulation for Coatings, Inks and Paints", Oldring (Hrsg.), 1994, SITA, London eingesetzt.

In einer weiteren bevorzugten Vorgehensweise werden zu den beschriebenen Comonomeren Monomere hinzugesetzt, die eine hohe statische Glasübergangstemperatur besitzen. Als Komponenten eigenen sich aromatische Vinylverbindungen, wie z.B. Styrol, wobei bevorzugt die aromatischen Kerne aus $C_4$- bis $C_{18}$-Bausteinen bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend ist.

Zur Weiterentwicklung können den Haftklebemassen Harze beigemischt sein. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Weiterhin können optional Weichmacher (Plastifizierungsmittel), weitere Füllstoffe (wie. z. B. Fasern, Ruß, Zinkoxid, Kreide, Voll- oder Hohlglaskugeln, Mikrokugeln aus anderen Materialien, Kieselsäure, Silikate), Keimbildner, elektrisch leitfähige Materialien, wie z.B. konjugierte Polymere, dotierte konjugierte Polymere, Metallpigmente, Metallpartikel, Metallsalze, Graphit, etc., Blähmittel, Compoundierungsmittel und/oder Alterungsschutzmittel, z.B. in Form von primären und sekundären Antioxidantien oder in Form von Lichtschutzmitteln zugesetzt sein.

Zusätzlich können Vernetzer und Promotoren zur Vernetzung beigemischt werden. Geeignete Vernetzer für die Elektronenstrahlvernetzung und UV-Vernetzung sind beispielsweise bi- oder multifunktionelle Acrylate, bi- oder multifunktionelle Isocyanate (auch in blokkierter Form) oder bi- oder multifunktionelle Epoxide.

Zu einer optionalen Vernetzung mit UV-Licht können den Polyacrylathaftklebemassen UV-absorbierende Photoinitiatoren zugesetzt werden. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenyl-ethanon, Dimethoxyhydroxyacetophenon, substituierte α-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare

Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London herangezogen werden.

## Elektrisch leitfähiger Primer

Der elektrisch leitfähige Primer wird ein- oder doppelseitig auf ein Trägermaterial aufgetragen. Als Trägermaterialien eigenen sich besonders bevorzugt Folien bestehend aus polymeren Materialien, wie z.B. PE, PP, Polyimiden, Polyamiden, BOPP, PET, PVC, PUR oder Nylon. Es können aber auch Vliese oder Gewebe ausgerüstet werden.

Als Primer-Grundsubstanz prinzipiell geeignet sind z.B. Phenolharze mit zumindestens einer Kautschukkomponente.
Als Kautschukkomponente lassen sich Naturkautschuke, Butylkautschuke und zahlreiche Synthesekautschuke einsetzen, wobei nur exemplarisch Acrylonitril-Butadien, Acrylonitril-Butadiene-Styrol Copolymere, Styrol-Butadien-Styrol, Styrol-Ethylen, Butylen-Styrol Copolymere, Polychloropren, Polybutadien, Polyisopren, Styrol-Isopren-Styrol Copolymere, und Mischung daraus genannt seien.

Nützliche Phenolharze umfassen z.B. Phenol-Formaldehyd Harze, kommerziell erhältlich von Union Carbide unter den Tradenamen UCAR BKR-2620 und UCAR CK-1635. Bevorzugte Primer enthalten z.B. 40 bis etwa 120 Teile Phenol Harz zu 100 Teilen Kautschukkomponente.

In einer weiteren bevorzugten Auslegung werden als Primermaterialien Poly(meth)acrylate eingesetzt. Die Primer können weitere Additive wie z.B. Harze, Antioxidatien und Farbstoffe enthalten.

Weiterhin ist Bestandteil des Primers ein elektrisch leitfähiges Material. Als elektrisch leitfähige Materialien lassen sich, ohne sich durch diese Aufzählung einzuschränken, Metallpartikel, Metallpulver bzw. Metallpigmente, Metallkugeln, Metallfasern, wobei als Metalle z.B. Nickel, Gold, Silber, Eisen, Blei, Zinn, Zink, Edelstahl, Bronze und Kupfer oder Nickel eingesetzt werden. Weiterhin nützlich sind z.B. auch Blei/Zinn Legierungen mit unterschiedlichen Zusammensetzungen, wie sie z.B. von der Fa. Sherrit Gordon, Ltd. angeboten werden. Weiterhin werden elektrisch leitfähige Polymere zugesetzt, wie z.B. Polythiophen, substiuierte Polythiophene, Polyethylendioxythiophene, Polyanilin, substituierte Polyaniline, Polyparaphenylen, substituierte Polyparaphenylene, Polypyrrol, substituierte Polypyrrole, Polyacetylene, substituierte Polyacetylene, Polyphenylsulfide, substituierte Polyphenylsulfide, Polyfurane, substituierte Polyfurane Polyalkylfluoren, substituierte Polyalkylfluorene sowie Gemische aus den obengenannten Polymeren. Zur Verbesserung der Leitfähigkeit können sogenannte Dopants hinzugefügt werden. Hier können verschiedene Metallsalze oder Lewis-Säure oder Elektrophile eingesetzt werden. Beispiele, die keinen Anspruch auf Vollständigkeit besitzen, sind p-Toluolsulfonsäure oder Camphorsulfonsäure
In einer weiteren bevorzugten erfinderischen Auslegung ist der Durchmesser der elektrisch leitfähigen Füllstoffe geringer als die Schichtdicke des Primers.

In einer weiteren Auslegung können als elektrisch leitfähige Materialien Kohlenstoffverbindungen, wie z.B. C-60 zugesetzt werden. Auch mit diesen Verbindungen kann durch gezielte Dotierung eine Verbesserung der elektrischen Leitfähigkeit erreicht werden.
Weitere elektrisch leitfähige Polymere umfassen Polyvinylbenzyltrimethyl-ammoniumchlorid und ähnliche Verbindungen, wie z.B. in US 5,061,294 zitiert.
Weiterhin lassen sich aber auch als elektrisch leitfähige Substanzen hygroskopische Salze einsetzen, wie sie in US 4,973,338 beschrieben werden.

In einer sehr bevorzugten Auslegung wird in einer Acrylatdispersionen Ethylendioxythiophen mit einem Eisen-III-salz polymerisiert. Diese Primerdispersion wird anschließend auf das Tragermaterial aufgetragen und getrocknet.

Elektrisch leitfähige Materialien werden zu 3 - 60 Gewichtsprozent mehr bevorzugt zwischen 10 und 50 Gewichtsprozent bezogen auf den Primer hinzugegeben, insbesondere in fester, z.B. pulverisierter Form. Der Anteil sollte aber nicht eine Menge überschreiten, so dass der Primer seine Wirkung verliert. Durch zu hohe Mengenanteile elektrisch leitfähiger Substanz kann der elektrisch leitfähige Primer seine haftvermittelnde Wirkung verlieren.

Die Schichtdicke des elektrisch leitfähigen Primers beträgt zwischen 0.5 $\mu$m und 25 $\mu$m, bevorzugt zwischen 1 und 10 $\mu$m.

Die elektrisch leitfähigen Primer können aus Lösung, aus Dispersion oder aus der Schmelze beschichtet werden. Zur Steigerung der inneren Kohäsion kann es von Vorteil sein, den Primer zu vemetzen. Die Vernetzung kann thermisch, über UV-Strahlung oder über Elektronenstrahlen erfolgen.

## Herstellverfahren für die Acrylathaftklebemassen

Zur Polymerisation werden die Monomere dermaßen gewählt, daß die resultierenden Polymere bei

Raumtemperatur oder höheren Temperaturen als Haftklebemassen eingesetzt werden können, insbesondere derart, daß die resultierenden Polymere haftklebende Eigenschaften entsprechend des "Handbook of Pressure Sensitive Adhesive Technology" von Donatas Satas (van Nostrand, New York 1989) besitzen.

Zur Erzielung einer für Haftklebemassen bevorzugten Glasübergangstemperatur $T_G$ der Polymere von $T_G \leq 25$ °C werden entsprechend dem vorstehend gesagten die Monomere sehr bevorzugt derart ausgesucht und die mengenmäßige Zusammensetzung der Monomermischung vorteilhaft derart gewählt, daß sich nach der ***Fox***-Gleichung (G1) (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $W_n$ den Massenanteil des jeweiligen Monomers n (Gew.-%) und $T_{G,n}$ die jeweilige Glasübergangstemperatur des Homopolymers aus den jeweiligen Monomeren n in K.

Zur Herstellung der Poly(meth)acrylathaftklebemassen werden vorteilhaft konventionelle radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet.

Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropylpercarbonat, t-Butylperoktoat, Benzpinacol. In einer sehr bevorzugten Auslegung wird als radikalischer Initiator 1,1'-Azo-bis-(cyclohexancarbonsäurenitril) (Vazo 88™ der Fa. DuPont) oder Azodisobutyronitril (AIBN) verwendet.

Die mittleren Molekulargewichte $M_W$ der bei der radikalischen Polymerisation entstehenden Haftklebemassen werden sehr bevorzugt derart gewählt, daß sie in einem Bereich von 200.000 bis 4.000.000 g/mol liegen; speziell für die weitere Verwendung als elektrisch-leitfähiger Schmelzhaftkleber mit Rückstellvermögen werden Haftklebemassen mit mittleren Molekulargewichten $M_W$ von 400.000 bis 1.400.000 g/mol hergestellt. Die Bestimmung des mittleren Molekulargewichtes erfolgt über Größenausschlußchromatographie (GPC) oder Matrix-unterstützte Laser-Desorption/Ionisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z.B. Hexan, Heptan, Octan, Isooctan), aromatische Kohlenwasserstoffe (z.B. Benzol, Toluol, Xylol), Ester (z.B. Essigsäureethylester, Essigsäurepropyl-, -butyl- oder -hexylester), halogenierte Kohlenwasserstoffe (z.B. Chlorbenzol), Alkanole (z.B. Methanol, Ethanol, Ethylenglycol, Ethylenglycolmonomethylether) und Ether (z.B. Diethylether, Dibutylether) oder Gemische davon. Die wäßrigen Polymerisationsreaktionen können mit einem mit Wasser mischbaren oder hydrophilen Colösungsmittel versetzt werden, um zu gewährleisten, daß das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethem, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 2 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Für die Herstellung kann es auch von Vorteil sein, die (Meth)acryfathaftklebemassen in Substanz zu polymerisieren. Hier eignet sich insbesondere die Präpolymerisationstechnik einzusetzen. Die Polymerisation wird mit UV-Licht iniitiert, aber nur zu einem geringen Umsatz ca. 10 - 30 % geführt. Anschließend kann dieser Polymersirup z.B. in Folien eingeschweisst werden (im einfachsten Fall Eiswürfel) und dann in Wasser zu hohem Umsatz durchpolymerisiert werden. Diese Pellets lassen sich dann als Acrylatschmelzkleber einsetzen, wobei für den Aufschmelzvorgang besonders bevorzugt Folienmaterialien eingesetzt werden, die mit dem Polyacrylat kompatibel sind. Auch für diese Präparationsmethode lassen sich die thermisch-leitfähigen Materialzusätze vor oder nach der Polymerisation zusetzen.

Zur Herstellung der Acrylathaftklebemassen können auch kontrollierte radikalische Polymerisationsmethoden und lebende Polymerisationen eingesetzt werden.

Orientierung, Beschichtungsverfahren, Ausrüstung des Trägermaterials

Zur Herstellung wird in einer bevorzugten Auslegung die Haftklebemasse aus Lösung beschichtet. Für thermisch vernetzende Haftklebemassen wird über Wärmezufuhr z.B. in einem Trockenkanal das Lösemittel entfernt und die Vemetzungsreaktion initiiert.

Zur Herstellung von orientierten Haftklebemassen werden die oben beschriebenen Polymere bevorzugt als Hotmelt-Systeme (also aus der Schmelze) beschichtet. Für das Herstellungsverfahren kann es daher erforderlich sein, das Lösemittel von der Haftklebemasse zu entfemen. Hier können im Prinzip alle dem Fachmann bekannten Verfahren eingesetzt werden. Ein sehr bevorzugtes Verfahren ist die Aufkonzentration über einen Ein- oder Doppelschneckenextruder. Der Doppelschneckenextruder kann gleich- oder gegenläufig betrieben werden. Das Lösemittel oder Wasser wird bevorzugt über mehrere Vakuumstufen abdestilliert. Zudem wird je nach Destillationstemperatur des Lösemittels gegengeheizt. Die Restlösemittelanteile betragen bevorzugt < 1 %, mehr bevorzugt < 0,5 % und sehr bevorzugt < 0,2 %. Der Hotmelt wird aus der Schmelze weiterverarbeitet.

In einer bevorzugten Ausführungsform wird die Orientierung innerhalb der Haftklebemasse durch das Beschichtungsverfahren erzeugt. Zur Beschichtung als Hotmelt und somit auch zur Orientierung können unterschiedliche Beschichtungsverfahren herangezogen werden. In einer Ausführung werden die elektrisch-leitfähigen Haftklebemassen über ein Walzenbeschichtungsverfahren beschichtet und die Orientierung über Recken erzeugt. Unterschiedliche Walzenbeschichtungsverfahren sind im "Handbook of Pressure Sensitive Adhesive Technology" von Donatas Satas (van Nostrand, New York 1989) beschrieben. In einer weiteren Ausführung wird die Orientierung durch Beschichtung über eine Schmelzdüse erreicht. Hier kann zwischen dem Kontakt und dem Kontaktlosen Verfahren unterschieden werden. Die Orientierung der Haftklebemasse kann hier zum einen durch das Düsendesign innerhalb der Beschichtungsdüse erzeugt werden oder wiederum durch einen Reckprozess nach dem Düsenaustritt. Die Orientierung ist frei einstellbar. Das Reckverhältnis kann z.B. durch die Breite des Düsenspaltes gesteuert werden. Eine Rekkung tritt immer dann auf, wenn die Schichtdicke des Haftklebefilms auf dem zu beschichtenden Trägermaterial geringer ist als die Breite des Düsenspaltes.

In einem weiteren bevorzugten Verfahren wird die Orientierung durch die Extrusionsbeschichtung erzielt. Die Extrusionsbeschichtung wird bevorzugt mit einer Extrusionsdüse vorgenommen. Die verwendeten Extrusionsdüsen können vorteilhaft aus einer der drei folgenden Kategorien stammen: T-Düse, Fischschwanz-Düse und Bügel-Düse. Die einzelnen Typen unterscheiden sich durch die Gestalt ihres Fließkanals. Durch die Form der Extrusionsdüse kann ebenfalls eine Orientierung innerhalb des Schmelzhaftklebers erzeugt werden. Weiterhin kann hier - in Analogie zur Schmelzdüsenbeschichtung - ebenfalls eine Orientierung nach dem Düsenaustritt durch Reckung des Haftklebebandfilmes erzielt werden.

Zur Herstellung von orientierten (Meth)Acrylathaftklebemassen wird besonders bevorzugt mit einer Bügeldüse auf einen Träger beschichtet, und zwar derart, daß durch eine Relativbewegung von Düse zu Träger eine Polymerschicht auf dem Träger entsteht.
Die Zeitdauer zwischen der Beschichtung und der Vernetzung ist in günstiger Weise gering. In einer bevorzugten Vorgehensweise wird nach weniger als 60 Minuten vernetzt, in einer mehr bevorzugten Vorgehensweise nach weniger 3 Minuten, in einer äußerst bevorzugen Vorgehensweise im in-line Verfahren nach weniger als 5 Sekunden.

Die besten Orientierungs-Effekte werden durch das Ablegen auf einer kalten Oberfläche erzielt. Daher sollte das Trägermaterial durch eine Walze während der Beschichtung direkt gekühlt werden. Die Kühlung der Walze kann durch einen Flüssigkeitsfilm/Kontaktfilm von außen oder von innen oder durch ein kühlendes Gas erfolgen. Das kühlende Gas kann ebenfalls dazu eingesetzt werden, um die aus der Beschichtungsdüse austretende Haftklebemasse abzukühlen. In einer bevorzugten Vorgehensweise wird die Walze mit einem Kontaktmedium benetzt, welches sich dann zwischen der Walze und dem Trägermaterial befindet. Bevorzugte Ausführungsformen für die Umsetzung einer solchen Technik werden weiter unten beschrieben.
Für dieses Verfahren kann sowohl eine Schmelzdüse als auch eine Extrusionsdüse eingesetzt werden. In einer sehr bevorzugten Vorgehensweise wird die Walze auf Raumtemperatur, in einer äußerst bevorzugten Vorgehensweise auf Temperaturen unterhalb 10 °C abgekühlt. Die Walze sollte mit rotieren.
In einer weiteren Vorgehensweise dieses Herstellverfahrens wird die Walze zudem zur Vernetzung der orientierten Haftklebemasse genutzt.

Zur UV-Vernetzung wird mittels kurzwelliger ultravioletter Bestrahlung in einem Wellenlängenbereich von 200 bis 400 nm, je nach verwendetem UV-Photoinitiator, bestrahlt, insbesondere unter Verwendung von Quecksilber-Hochdruck- oder -Mitteldruck-Lampen bei einer Leistung von 80 bis 240 W/cm. Die Bestrahlungsintensität wird der jeweiligen Quantenausbeute des UV-Photoinitiators, dem einzustellenden Vemetzungsgrad und eventuell dem Maß der Orientierung angepaßt.

Weiterhin ist es in einer bevorzugten Auslegung möglich, die Haftklebemassen mit Elektronenstrahlen zu vernetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

Es können auch beide Vernetzungsverfahren angewendet werden oder andere Verfahren, die hochenergetische Bestrahlung ermöglichen.

In einem weiteren bevorzugten Herstellverfahren werden die orientierten Haftklebemassen auf eine mit einem Kontaktmedium versehende Walze beschichtet. Durch das Kontaktmedium kann wiederum die Haftklebemasse sehr schnell abgekühlt werden. Vorteilhaft wird dann später auf das Trägermaterial kaschiert.

Weiterhin kann als Kontaktmedium auch ein Material verwendet werden, welches in der Lage ist, einen Kontakt zwischen der Haftklebemasse und der Walzenoberfläche herzustellen, insbesondere ein Material, welches die Hohlräume zwischen Trägermaterial und Walzenoberfläche (beispielsweise Unebenheiten in der Walzenoberfläche, Blasen) ausfüllt. Zur Umsetzung dieser Technik wird eine rotierende Kühlwalze mit einem Kontaktmedium beschichtet. Als Kontaktmedium wird in einer bevorzugten Vorgehensweise eine Flüssigkeit gewählt, wie z.B. Wasser.

Für Wasser als Kontaktmedium bieten sich als Zusätze beispielsweise Alkylalkohole wie Ethanol, Propanol, Butanol, Hexanol an, ohne sich durch diese Beispiele in der Auswahl der Alkohole einschränken zu wollen. Weiterhin sehr vorteilhaft sind insbesondere längerkettige Alkohole, Polyglykole, Ketone, Amine, Carboxylate, Sulfonate und dergleichen. Viele dieser Verbindungen senken die Oberflächenspannung oder erhöhen die Leitfähigkeit.

Eine Absenkung der Oberflächenspannung kann auch durch den Zusatz geringer Mengen an nichtionischen und/oder anionischen und/oder kationischen Tensiden zu dem Kontaktmedium erreicht werden. Im einfachsten Fall lassen sich hierzu kommerzielle Spülmittel oder Seifenlösungen verwenden, bevorzugt in einer Konzentration von einigen g/l in Wasser als Kontaktmedium. Besonders geeignet sind spezielle Tenside, welche auch bei geringer Konzentration eingesetzt werden können. Hierfür seien beispielsweise Sulfoniumtenside (z.B. β-Di(hydroxyalkyl)sulfoniumsalz), weiterhin beispielsweise ethoxylierte Nonylphenylsulfonsäureammoniumsalze oder Blockcopolymere, insbesondere Diblöcke. Hier sei insbesondere verwiesen auf den Stand der Technik unter "surfactants" in Ullmann's Encyclopedia of Industrial Chemistry, Sixth Edition, 2000 Electronic Release, Wiley-VCH, Weinheim 2000.

Als Kontaktmedien können die vorgenannten Flüssigkeiten auch ohne den Zusatz von Wasser jeweils für sich oder in Kombination miteinander eingesetzt werden.

Zur Verbesserung der Eigenschaften des Kontaktmediums (beispielsweise zur Erhöhung der Scherresistenz, Verringerung der Übertragung von Tensiden oder dergleichen auf die Lineroberfläche und damit verbesserte Reinigungsmöglichkeiten des Endproduktes) können dem Kontaktmedium und/oder den eingesetzten Zusatzstoffen weiterhin vorteilhaft Salze, Gele und ähnliche viskositätssteigernde Additive zugesetzt werden.

Des weiteren kann die Walze makroskopisch glatt oder eine gering strukturierte Oberfläche aufweisen. Es hat sich bewährt, wenn sie eine Oberflächenstruktur besitzt, insbesondere eine Aufrauhung der Oberfläche. Die Benetzung durch das Kontaktmedium kann dadurch verbessert werden.

Besonders gut läuft das Beschichtungsverfahren ab, wenn die Walze temperierbar ist, bevorzugt in einem Bereich von -30 C bis 200°C, ganz besonders bevorzugt von 5 °C bis 25 °C.

Das Kontaktmedium wird bevorzugt auf die Walze aufgetragen werden. Dabei kann eine zweite Walze, welche das Kontaktmedium aufnimmt, zum kontinuierlichen Benetzen der Beschichtungswalze verwendet werden. Es ist aber auch möglich, daß es berührungslos aufgebracht wird, zum Beispiel durch Aufsprühen.

Für die Variante des Herstellverfahrens, indem die Walze gleichzeitig zur Verwendung z.B. mit Elektronenstrahlen eingesetzt wird, wird gewöhnlich eine geerdete Metallwalze, die die auftreffenden Elektronen und die dabei entstehende Röntgenstrahlung absorbiert eingesetzt.

Zur Verhinderung der Korrosion ist die Walze gewöhnlich mit einer Schutzschicht überzogen. Diese wird bevorzugt so ausgewählt, daß sie von dem Kontaktmedium gut benetzt wird. Im allgemeinen ist die Oberfläche leitfähig. Es kann aber auch günstiger sein, sie mit einer oder mehreren Schichten aus isolierendem oder halbleitendem Material zu beschichten.

Für den Fall einer Flüssigkeit als Kontaktmedium kann man in hervorragender Weise vorgehen, wenn eine zweite Walze, vorteilhaft mit einer benetzbaren oder saugfähigen Oberfläche, durch ein Bad mit dem Kontaktmedium läuft, dabei mit dem Kontaktmedium benetzt oder getränkt wird und durch Berührung mit der Walze einen Film dieses Kontaktmediums aufträgt bzw. aufstreicht.

In einer bevorzugten Vorgehensweise wird die Haftklebemasse direkt auf der mit dem Kontaktmedium versehenden Walze beschichtet und vernetzt. Hierfür können wiederum die beschriebenen Methoden und Anlagen zur UV-Vernetzung und ES-Vemetzung eingesetzt werden. Nach der Vernetzung wird dann die Haftklebemasse auf das geprimerte Trägermaterial übertragen. Es können die bereits zitierten gerpimerten Trägermaterialien eingesetzt werden.

Die Ausprägung der Orientierung innerhalb der Haftklebemassen ist vom Beschichtungsverfahren abhängig. Die Orientierung kann z.B. durch die Düsen- und Beschichtungstemperatur sowie durch das Molekulargewicht des Polymers gesteuert werden.

Der Grad der Orientierung ist durch die Düsenspaltbreite frei einstellbar. Je dicker der Haftklebemassenfilm ist, der aus der Beschichtungsdüse herausgedrückt wird, desto stärker kann die Klebemasse auf einen dünneren Haftklebemassenfilm auf dem Trägermaterial gereckt werden. Dieser Reckungsvorgang kann neben der frei einstellbaren Düsenbreite auch durch die Bahngeschwindigkeit des abnehmenden Trägermaterials frei eingestellt werden.

Die Messung der Orientierung der Haftklebemasse kann weiterhin mit einem Polarimeter, mit Infrarot-Dichroismus oder mit Röntgenstreuung erfolgen. Es ist bekannt, daß die Orientierung in Acrylathaftklebemassen im unvernetzten Zustand in vielen Fällen lediglich einige Tage erhalten bleibt. Das System relaxiert in der Ruhe- oder Lagerungszeit und verliert seine Vorzugsrichtung. Durch die Vernetzung nach der Beschichtung kann dieser Effekt bedeutend verstärkt werden. Die Relaxierung der orientierten Polymerketten konvergiert gegen Null, und die orientierten Haftklebemassen können ohne Verlust ihrer Vorzugsrichtung über einen sehr großen Zeitraum gelagert werden.

In einer bevorzugten Methode wird das Maß der Orientierung durch die Messung des Rückschrumpfes im freien Film (s. Test B) ermittelt.

Neben den beschriebenen Verfahren kann die Orientierung auch nach der Beschichtung erzeugt werden. Hier wird dann bevorzugt ein dehnbares geprimertes Trägermaterial eingesetzt, wobei dann die Haftklebemasse bei Ausdehnung mit gereckt wird. Für diesen Fall lassen sich auch konventionell aus Lösung oder Wasser beschichtete Haftklebemassen einsetzen. In einer bevorzugten Vorgehensweise wird dann diese gereckte Haftklebemasse wiederum mit actinischer Strahlung vernetzt.

<u>Produktaufbauten</u>

Figur 1 zeigt mehrere im Rahmen der Erfindung mögliche Produktaufbauten:

a) <u>Einseitiger Produktaufbau</u>

Die erfinderischen antistatischen Haftklebebänder bestehen aus einer Trägerfolienschicht (a) einer elektrisch leitfähigen Primerschicht (b) und der Haftklebemassenschicht (c)). Die Schichtdicke der Haftklebemasse beträgt zwischen 5 μm und 1 mm, bevorzugt zwischen 25 und 200 μm. Zur Verwendung als Haftklebebandrolle kann in einer bevorzugten Auslegung die Haftklebemasse mit einem Trennpapier/folie abgedeckt werden. In einer weiteren bevorzugten Auslegung wird die in Figur 1 nach unten gerichtete Seite des Trägmaterials mit einer Releaseschicht versehen. In einer bevorzugten Auslegung werden Silikonbasierende oder fluorierte Polymere als Releasematerial eingesetzt.

<u>b) doppelseitiger Aufbau</u>

Die erfinderischen antistatischen Haftklebebänder bestehen aus einer Trägerfolienschicht (a) einer elektrisch leitfähigen Primerschicht (b) und zwei Haftklebemassenschichten (c) sowie (d) (Fig. 2). Die Schichtdicke der Haftklebemassen (c) und (d) beträgt zwischen 5 μm und 1 mm, bevorzugt zwischen 25 und 200 μm. In einer sehr bevorzugten Auslegung sind (c) und (d) identisch. Zur Verwendung als Haftklebebandrolle wird in einer sehr bevorzugten Auslegung das Haftklebeband mit einem(r) Trennpapier/folie eingedeckt.

<u>c) doppelseitiger Aufbau</u>

Die erfinderischen antistatischen Haftklebebänder bestehen aus einer Trägerfolienschicht (a) zwei elektrisch leitfähigen Primerschichten (b) und (b') und zwei Haftklebemassenschichten (c) sowie (d) (Fig. 3). In einer sehr bevorzugten Auslegung sind (b) und (b') identisch. Die Schichtdicke der Haftklebemassen (c) und (d) beträgt zwischen 5 μm und 1 mm, bevorzugt zwischen 25 und 200 μm. In einer sehr bevorzugten Auslegung sind (c) und (d) identisch. Zur Verwendung als Haftklebebandrolle wird in einer sehr bevorzugten Auslegung das Haftklebeband mit einem(r) Trennpapier/folie eingedeckt.

<u>Experimente</u>

Die Erfindung wird im folgenden durch Experimente beispielhaft erläutert.

Folgende Testmethoden wurden angewendet.

<u>Gelpermeationschromatographie GPC (Test A)</u>

Die Bestimmung des mittleren Molekulargewichtes $M_W$ und der Polydispersität PD erfolgte über die Gelpermeationschromatographie. Als Eluent wurde THF mit 0,1 Vol.-% Trifluoressigsäure eingesetzt. Die Messung erfolgte bei 25 °C. Als Vorsäule wurde PSS-SDV, 5 μ, $10^3$ Å, ID 8,0 mm x 50 mm verwendet. Zur Auftrennung wurden die Säulen PSS-SDV, 5 μ, $10^3$ sowie $10^5$ und $10^6$ mit jeweils ID 8,0 mm x 300 mm eingesetzt. Die Probenkonzentration betrug 4 g/l, die Durchflußmenge 1,0 ml pro Minute. Es wurde gegen PMMA-Standards gemessen.

<u>Messung des Rückschrumpfes (Test B)</u>

Parallel zur Beschichtungsrichtung des Hotmelts wurden Streifen von mindestens 30 mm Breite und 20 cm Länge geschnitten. Bei Masseaufträgen bei 100 $g/m^2$ wurden je 4 Streifen übereinander laminiert, bei 50 $g/m^2$ 8 Streifen übereinander laminiert, um vergleichbare Schichtdicken zu erhalten. Der derart erhaltene Körper

wurde dann auf exakt 20 mm Breite geschnitten und an den jeweiligen Enden in einem Abstand von 15 cm mit Papierstreifen überklebt. Der auf diese Weise präparierte Prüfkörper wurde dann bei RT vertikal aufgehängt und die Änderung der Länge über die Zeit verfolgt, bis keine weitere Schrumpfung der Probe mehr festgestellt werden konnte. Die um den Endwert reduzierte Ausgangslänge wurde dann bezogen auf die Ausganglänge als Rückschrumpf in Prozent angegeben.
Für die Messung der Orientierung nach längerer Zeit wurden die beschichteten und orientierten Haftklebemassen über einen längeren Zeitraum als Lappenmuster gelagert und anschließend analysiert.

Antistatische Eigenschaften (Test C)

Ein 13 mm breiter Haftklebebandstreifen wird mit 50 m/min von der Haftklebebandrolle abgerollt. Dieser Haftklebebandstreifen wird auf 1 cm an einen gerade nach unten hängenden 30 cm langen, 3 cm breiten und 16 µm dicken, nicht geladenen PET-Folienstreifen am nach unten ausgerichteten Ende herangeführt. Der Test wird bestanden, wenn der nach unten hängende Folienstreifen nicht vom Haftklebeband angezogen wird und am Haftklebeband festklebt.

Herstellung der Proben

Polymer 1

Ein für radikalische Polymerisationen konventioneller 200 L-Reaktor wurde mit 2400 g Acrylamid, 64 kg 2-Ethylhexylacrylat, 6,4 kg N-Isopropylacrylamid und 53,3 kg Aceton/Isopropanol (95:5) befüllt. Nach 45 Minuten Durchleiten mit Stickstoffgas unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 40 g AIBN hinzugegeben. Nach 5 h und 10 h wurde mit jeweils 15 kg Aceton/Isopropanol (95:5) verdünnt. Nach 6 und 8 h wurden jeweils 100 g Dicyclohexylperoxydicarbonat (Perkadox 16®, Fa. Akzo Nobel) gelöst in jeweils 800 g Aceton hinzugegeben. Die Reaktion wurde nach 24 h Reaktionszeit abgebrochen und auf Raumtemperatur abgekühlt. Die Bestimmung des Molekulargewichtes nach Test A ergab ein $M_W$ = 754.000 g/mol bei einer Polydispersität $M_W/M_n$ = 5,3.

Polymer 2

Ein für radikalische Polymerisationen konventioneller 200 L-Reaktor wurde mit 1200 g Acrylamid, 74 kg 2-Ethylhexylacrylat, 4,8 kg N-Isopropylacrylamid und 53,3 kg Aceton/Isopropanol (95:5) befüllt. Nach 45 Minuten Durchleiten mit Stickstoffgas unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 40 g AIBN hinzugegeben. Nach 5 h und 10 h wurde mit jeweils 15 kg Aceton/Isopropanol (95:5) verdünnt. Nach 6 und 8 h wurden jeweils 100 g Dicyclohexylperoxydicarbonat (Perkadox 16®, Fa. Akzo Nobel) gelöst in jeweils 800 g Aceton hinzugegeben. Die Reaktion wurde nach 24 h Reaktionszeit abgebrochen und auf Raumtemperatur abgekühlt.
Die Bestimmung des Molekulargewichtes nach Test A ergab ein $M_W$ = 812.000 g/mol bei einer Polydispersität $M_W/M_n$ = 5,8.

i) Musterherstellung zur Bestimmung des Rückschrumpfes

Die Haftklebemassen in Lösung wurden,an einem Bersdorff Aufkonzentrationsextruder mit einem Durchsatz von ca. 40 kg/h bei einer Temperatur von ca. 115 °C aufkonzentriert. Der Restlösemittelanteil belief sich nach der Aufkonzentration auf kleiner 0,5 Gew.-%. Dann wurde durch eine Bügel-Extrusionsdüse mit einem Düsenspalt von 300 µm und einer Beschichtungsbreite von 33 cm bei einer bestimmten Beschichtungstemperatur (Massetemperatur) mit einer Bahngeschwindigkeit von 10 m/min auf eine mit 1,5 g/m$^2$ Silikonbeschichtete (Polydimethylsiloxan) 12 µm PET-Folie beschichtet. Bei einem Masseauftrag von 50 g/m$^2$ (ca. 50 µm dicke Haftklebeschicht) wurde ein Reckverhältnis von 6:1 eingestellt.

Die silikonisierte PET-Folie wird über eine auf 5 °C abgekühlte und mitrotierende Stahlwalze geführt. Beim Auflagepunkt des Haftklebefilms auf die PET-Folie wird somit der Haftklebemassenfilm sofort heruntergekühlt.
Im In-line Verfahren wird dann nach einer Bahnstrecke von ca. 5 m das Haftklebeband mit Elektronenstrahlen vernetzt.
Für die Elektronenbestrahlung erfolgte die Vernetzung mit einem Gerät der Fa. Electron Crosslinking AB, Halmstad, Schweden. Das beschichtete Haftklebeband wurde dabei über eine standardmäßig vorhandene Kühlwalze unter dem Lenard-Fenster des Beschleunigers hindurch geführt. Dabei wurde in der Bestrahlungszone der Luftsauerstoff durch Spülen mit reinem Stickstoff verdrängt. Die Bahngeschwindigkeit betrug jeweils 10 m/min. Es wurde mit einer Beschleunigungsspannung von 200 kV durchstrahlt.
Zur Bestimmung des Rückschrumpfes und daher zur Ermittlung des Maßes der Orientierung wurde der Test B durchgeführt.

Herstellung der geprimerten 12 µm dicken Trägerfolie (PET-Folie)

Zu 100 g Polybutylacrylatdispersion (PLEX

4124 D, Fa. Röhm, Feststoffgehalt = 59%) werden 20 g 3,4-Ethylendioxythiophen (Bayer AG) und 1.5 g Eisen-(III)-p-toluolsulfonat hinzugegeben.
Die Mischung wurde über einen Streichbalken auf ein 12 μm dicke PET-Folie beschichtet, 1 h bei Raumtemperatur und anschließend 1 h bei 60°C getrocknet. Nach dem Trocknen betrug die Schichtdicke des Primers ca. 1.5 μm. Für doppelseitige Haftklebebänder wurde die PET-Folie auch doppelseitig mit dem identischen Primer und gleicher Schichtdicke beschichtet.

Herstellung der Haftklebebänder

ii) Herstellung der orientierten Haftklebebänder

Es wurde analog zu i) vorgegangen. Als Trägermaterial wurde eine zuvor geprimerte 12 μm dicke PET-Folie eingesetzt. Alle Prozessparameter (Bahngeschwindigkeit, Beschichtungstemperatur, Reckverhältnis, Polyacrylathaftklebemasse, Vernetzungsdosis) wurden konstant gehalten. Zur Herstellung der Haftklebebänder wurde diese PET-Folie beschichtet, vernetzt und dann die Haftklebeseite mit einem Trennpapier (120 μm polyolefinisch (PE) beschichtetes Papier, beidseitig silikonisiert, 1,4 $g/m^2$ Polydimethylsiloxan, Fa. Loparex oder 100 μm Glassin-Trennpapier, einseitig silikonisiert, abgedeckt.
Im zweiten Schritt wurde auf die andere PET Folienseite die aus i) bereits vernetzte Haftklebemasse zukaschiert, wobei über eine Walze die Haftklebemasse angedrückt wurde und anschließend die silikonisierte PET-Folie delaminiert wurde. Das doppelseitige Haftklebeband wird zum Schluss aufgerollt.
Der zweite Arbeitsschritt entfiel bei der Herstellung der nur einseitig klebenden Muster. Für doppelseitige Haftklebebänder wurden doppelseitig geprimerte PET-Folien eingesetzt, für einseitige nur einseitige geprimerte PET-Folien, wobei dann die Haftklebemasse auf die geprimerte Seite laminiert wurde.

iii) Herstellung der nicht orientierten Haftklebebänder

Die Haftklebemassen in Lösung wurden auf ein silikonisiertes Trennpapier (120 μm polyolefinisch (PE) beschichtetes Papier, beidseitig silikonisiert, 1,4 $g/m^2$ Polydimethylsiloxan, Fa. Loparex oder 100 μm Glassin-Trennpapier, einseitig silikonisiert, beschichtet (Auftragsverfahren: Streichbalken). In einem Trockenkanal wurde das Lösemittel über mehrere Temperaturzonen entfernt, wobei in der ersten Zone mit 50 °C, dann mit 80 °C, und in den letzten drei Heizzonen mit 100 °C erhitzt wurde. Die Bahngeschwindigkeit betrug 10 m/min. Nach der thermischen Entfernung der Lösungsmittel wurde die 12 μm dicke PET Folie zukaschiert. In einem zweiten Schritt wurde auf die PET Folie dieses Verbundes wiederum gelöste Haftklebemasse beschichtet. Das Lösungsmittel wurde thermisch entfernt. Das doppelseitige Haftklebeband wird zum Schluss aufgerollt.

Der zweite Arbeitsschritt entfiel bei der Herstellung der nur einseitig klebenden Muster. Für doppelseitige Haftklebebänder wurden doppelseitig geprimerte PET-Folien eingesetzt, für einseitige nur einseitige geprimerte PET-Folien, wobei dann die Haftklebemasse auf die geprimerte Seite laminiert wurde.

Haftklebeband (1)

Polymer 1 wird nach i) aufkonzentriert und nach ii) wird 2 x 100 $g/m^2$ auf eine 12 μm dicke PET-Folie beschichtet. Die Beschichtungstemperatur betrug 150°C. Es wurde mit 30 kGy ES-Dosis vernetzt.

Haftklebeband (2)

Polymer 1 wird in Lösung mit 2 Gew.-% Genomer 4212® (Polyurethandiacrylat der Fa. Rahn) und mit 30 Gew.-% DT 110 (Terpen-Phenolharz der Fa. DRT) abgemischt.
Anschließend wird nach i) aufkonzentriert und nach ii) wird 2 x 100 $g/m^2$ auf eine 12 μm dicke beidseitig geprimerte PET-Folie beschichtet. Die Beschichtungstemperatur betrug 150°C. Es wurde mit 70 kGy ES-Dosis vernetzt.

Haftklebeband (3)

Polymer 2 wird in Lösung mit 2 Gew.-% Genomer 4212® (Polyurethandiacrylat der Fa. Rahn), mit 30 Gew.-% Novares TK 90® (C5-C9 Kohlenwasserstoffharz der Fa. VFT Rüttgers) und 8 Gew.-% Reofos 65® (Oligophosphat der Fa. Great Lake Chemicals) abgemischt. Anschließend wird nach i) aufkonzentriert und nach ii) mit 2 x 50 $g/m^2$ auf eine 12 μm dicke beidseitig geprimerte PET-Folie beschichtet. Die Beschichtungstemperatur betrug 120°C. Es wurde mit 60 kGy ES-Dosis vernetzt.

Haftklebeband (4)

Polymer 1 wird aus Lösung nach iii) mit 2 x 100 $g/m^2$ auf eine 12 μm dicke beidseitig geprimerte PET-Folie beschichtet. Die Trocknungstemperatur betrug maximal 100°C. Es wurde mit 30 kGy ES-Dosis vernetzt.

Haftklebeband (5)

Polymer 1 wird aus Lösung nach iii) mit 100 $g/m^2$ auf eine 12 μm dicke einseitig geprimerte PET-Folie beschichtet. Die Trocknungstemperatur betrug maximal 100°C. Es wurde mit 30 kGy ES-Dosis vernetzt.

Haftklebeband (6)

Polymer 1 wird aus Lösung nach iii) mit 100 $g/m^2$ auf eine 12 μm dicke PET-Folie beschichtet. Die Trocknungstemperatur betrug maximal 100°C. Es wurde mit 30 kGy ES-Dosis vernetzt.

Resultate

In einem ersten Schritt wurden 2 Polymere mit einem mittleren Molekulargewicht $M_W$ von ca. 800.000 g/mol hergestellt. Mit diesen Haftklebemassen wurden die Haftklebebänder 1 bis 5 hergestellt. Es wurden einseitige und doppelseitige Haftklebebänder untersucht, wobei als Trägermaterial eine mit 3,4-Polyethylendioxythiophen geprimerte 12 $\mu$m dicke PET-Folie eingesetzt wurde. Als Referenzmaterial wurde Haftklebeband 6 ohne elektrisch leitfähigen Primer hergestellt. Um den Effekt der Antistatik zu eruieren, wurden diese Haftklebebänder intensiv untersucht.

In einer ersten Untersuchung wurde der Grad der Orientierung der einzelnen Haftklebemassen ermittelt. Daher wurde im folgenden nach Testmethode B der Rückschrumpf im freien Film bestimmt. Die gemessenen Werte sind in Tabelle 1 zusammengefasst.

Tabelle 1. Übersicht ermittelte Rückschrumpfwerte im freien Film (Test B).

| Beispiel | Rückschrumpf im freien Film (Test B) |
|---|---|
| 1 | 66 % |
| 2 | 62 % |
| 3 | 56 % |
| 4 | 0% |
| 5 | 0% |
| 6 | 0% |

Die aus der Schmelze beschichteten Haftklebemassen weisen alle einen Rückschrumpf auf. Dagegen besitzen die aus Lösung beschichteten Haftklebemassen keinen Rückschrumpf und somit keine Orientierung.

Um das antistatische Verhalten zu beurteilen, wurde der Test C durchgeführt. Die Ergebnisse sind in der folgenden Tabelle 2 zusammengefasst:

Tabelle 2: Übersicht Untersuchung der Antistatik (Test C).

| Beispiel | Antistatik (Test C) |
|---|---|
| 1 | bestanden |
| 2 | bestanden |
| 3 | bestanden |
| 4 | bestanden |
| 5 | bestanden |
| 6 | nicht bestanden |

Aus den Messungen geht hervor, dass die mit dem elektrisch leitfähigen Primer ausgestatteten Haftklebebänder alle den Antistatik-Test bestehen. Nur das Referenzmuster 6 besteht diesen Test nicht. Weiterhin können durch den erfindungsgemäßen Aufbau sowohl einseitig als auch doppelseitige Haftklebebänder mit antistatischen Eigenschaften versehen werden. Zudem werden die guten antistatischen Eigenschaften nicht durch die Haftklebemassenzusammensetzung beeinflußt. Es wurden zwei unterschiedliche Polymere erprobt sowie unterschiedliche Harzabmischungen vorgenommen. Weiterhin lassen sich die Beispiele 1- 3 hervorragend als antistatische Stanzlinge einsetzen.

**Patentansprüche**

1. Antistatisches Haftklebeband mit mehrschichtigem Aufbau aus einer Trägerschicht und wenigstens einer Haftklebeschicht, **dadurch gekennzeichnet, dass** das Haftklebeband wenigstens eine zusätzliche elektrisch leitfähige Primerschicht zwischen der Trägerschicht und der wenigstens einen Haftklebeschicht aufweist.

2. Antistatisches Haftklebeband nach Anspruch 1, **dadurch gekennzeichnet, dass** die elektrisch leitfähige Primerschicht elektrisch leitfähige Partikel enthält, vorzugsweise aus Metall, elektrisch dotierten Materialien oder elektrisch leitfähigen Polymeren.

3. Antistatisches Haftklebeband nach Anspruch 1, **dadurch gekennzeichnet, dass** die elektrisch leitfähige Primerschicht elektrisch leitfähige Materialien, vorzugsweise elektrisch dotierte Materialien, elektrisch leitfähige Polymere oder elektrisch leitfähige organische Salze in einer Menge von vorzugsweise 5 bis 60, weiter vorzugsweise 10 bis 50 Gew.-% enthält.

4. Antistatisches Haftklebeband nach einem der Ansprüche 1 bis 3, **dadurch gekennzeichnet, dass** die elektrisch leitfähige Primerschicht elektrisch leitfähige konjugierte Polymere, insbesondere 3,4-PEDT enthält.

5. Antistatisches Haftklebeband nach einem der Ansprüche 1 bis 4, **dadurch gekennzeichnet, dass** die Haftklebeschicht eine Polyacrylat t-laftklebemasse enthält, vorzugsweise auf Methacrylatbasis.

6. Antistatisches Haftklebeband nach einem der Ansprüche 1 bis 5, **dadurch gekennzeichnet, dass** die Haftklebeschicht einen Rückschrumpf aufweist.

7. Antistatisches Haftklebeband nach einem der Ansprüche 1 bis 6, **gekennzeichnet durch** folgenden mehrschichtigen Aufbau:

Haftktebeschicht/Trägerschicht/ Haftktebeschicht.

**8.** Antistatisches Haftklebeband nach einem der Ansprüche 1 bis 6, **gekennzeichnet durch** folgenden mehrschichtigen Aufbau:

Haftklebeschicht/elektrisch leitfähige Primerschicht/Trägerschicht/elektrisch leitfähige Primerschicht/Haftklebeschicht.

**9.** Antistatisches Haftklebeband nach einem der Ansprüche 1 bis 6, **gekennzeichnet durch** folgenden mehrschichtigen Aufbau:

Haftklebeschicht/elektrisch leitfähige Primerschicht/Trägerschicht/Haftklebeschicht.

**10.** Verwendung des antistatischen Haftklebebandes nach einem der Ansprüche 1 bis 9 zur Herstellung von Stanzlingen.

**Claims**

**1.** Antistatic pressure-sensitive adhesive tape of multilayer construction from a carrier layer and at least one pressure-sensitive adhesive layer, **characterized in that** the pressure-sensitive adhesive tape comprises at least one additional electrically conductive primer layer between the carrier layer and the at least one pressure-sensitive adhesive layer.

**2.** Antistatic pressure-sensitive adhesive tape according to Claim 1, **characterized in that** the electrically conductive primer layer comprises electrically conductive particles, preferably of metal, electrically doped materials or electrically conductive polymers.

**3.** Antistatic pressure-sensitive adhesive tape according to Claim 1, **characterized in that** the electrically conductive primer layer comprises electrically conductive materials, preferably electrically doped materials, electrically conductive polymers or electrically conductive organic salts, in an amount of preferably 5% to 60%, more preferably 10% to 50% by weight.

**4.** Antistatic pressure-sensitive adhesive tape according to any one of Claims 1 to 3, **characterized in that** the electrically conductive primer layer comprises electrically conductive conjugated polymers, especially 3,4-PEDT.

**5.** Antistatic pressure-sensitive adhesive tape according to any one of Claims 1 to 4, **characterized in that** the pressure-sensitive adhesive layer comprises a polyacrylate pressure-sensitive adhesive, based preferably on methacrylate.

**6.** Antistatic pressure-sensitive adhesive tape according to any one of Claims 1 to 5, **characterized in that** the pressure-sensitive adhesive layer exhibits a shrinkback.

**7.** Antistatic pressure-sensitive adhesive tape according to any one of Claims 1 to 6, **characterized by** the following multilayer construction:

pressure-sensitive adhesive layer/carrier layer/pressure sensitive adhesive layer.

**8.** Antistatic pressure-sensitive adhesive tape according to any one of Claims 1 to 6, **characterized by** the following multilayer construction:

pressure-sensitive adhesive layer/electrically conductive primer layer/carrier layer/electrically conductive primer layer/pressure sensitive adhesive layer.

**9.** Antistatic pressure-sensitive adhesive tape according to any one of Claims 1 to 6, **characterized by** the following multilayer construction:

pressure-sensitive adhesive layer/electrically conductive primer layer/carrier layer/pressure sensitive adhesive layer.

**10.** Use of the antistatic pressure-sensitive adhesive tape according to any one of Claims 1 to 9 for producing punched products.

**Revendications**

**1.** Bande auto-adhésive antistatique avec une structure multicouche constituée d'une couche support et d'au moins une couche auto-adhésive, **caractérisée en ce que** la bande auto-adhésive présente au moins une couche de primaire additionnelle électriquement conductrice entre la couche support et la au moins une couche auto-adhésive.

**2.** Bande auto-adhésive antistatique selon la revendication 1, **caractérisée en ce que** la couche de primaire électriquement conductrice contient des particules électriquement conductrices, de préférence de métal, de matériaux électriquement dopés ou de polymères électriquement conducteurs.

**3.** Bande auto-adhésive antistatique selon la revendication 1, **caractérisée en ce que** la couche de primaire électriquement conductrice contient des matériaux électriquement conducteurs, de préférence des matériaux électriquement dopés, des polymères

électriquement conducteurs ou des sels organiques électriquement conducteurs en une quantité de préférence de 5 à 60, mieux encore de 10 à 50% en poids.

**4.** Bande auto-adhésive antistatique selon l'une quelconque des revendications 1 à 3, **caractérisée en ce que** la couche de primaire électriquement conductrice contient des polymères conjugués électriquement conducteurs, en particulier le 3,4-PEDT.

**5.** Bande auto-adhésive antistatique selon l'une quelconque des revendications 1 à 4, **caractérisée en ce que** la couche auto-adhésive contient une composition auto-adhésive de polyacrylate, de préférence à base de méthacrylate.

**6.** Bande auto-adhésive antistatique selon l'une quelconque des revendications 1 à 5, **caractérisée en ce que** la couche auto-adhésive présente un retrait.

**7.** Bande auto-adhésive antistatique selon l'une quelconque des revendications 1 à 6, **caractérisée par** la structure multicouche suivante :

couche auto-adhésive/couche support/couche auto-adhésive.

**8.** Bande auto-adhésive antistatique selon l'une quelconque des revendications 1 à 6, **caractérisée par** la structure multicouche suivante :

couche auto-adhésive/couche de primaire électriquement conductrice/couche de support/couche de primaire électriquement conductrice/couche auto-adhésive.

**9.** Bande auto-adhésive antistatique selon l'une quelconque des revendications 1 à 6, **caractérisée par** la structure multicouche suivante :

couche auto-adhésive/couche de primaire électriquement conductrice/couche de support/couche auto-adhésive.

**10.** Utilisation de la bande auto-adhésive antistatique selon l'une quelconque des revendications 1 à 9 pour la préparation de pièces brutes.

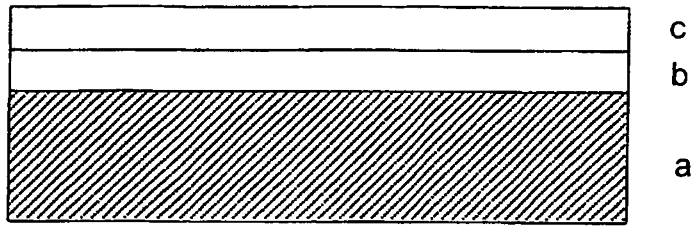


Fig. 1

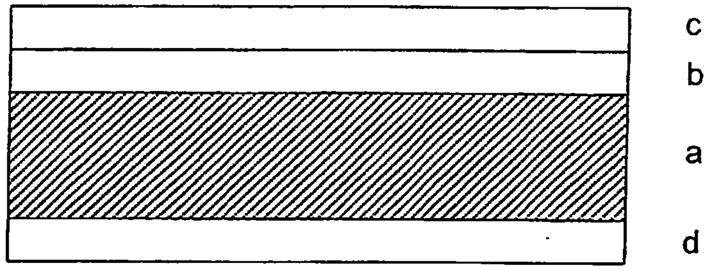


Fig. 2

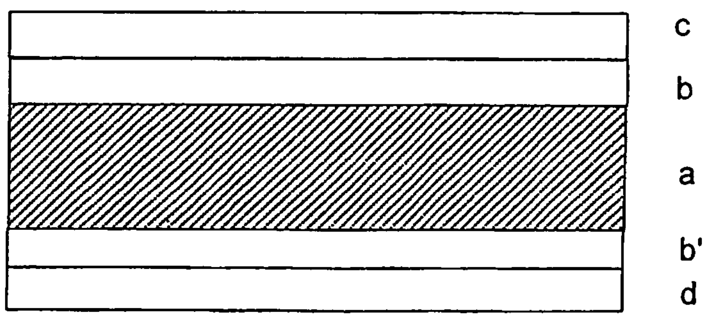


Fig. 3